# EUROPEAN PATENT APPLICATION

(11) **EP 3 680 752 A1**
(43) Date of publication of application: **15.07.2020**
(21) Application number: 18868461.7
(22) Date of filing: 19.10.2018
(51) Int. Cl.: G06F 3/01, G08B 6/00

(54) **HAPTIC INFORMATION PROVIDING SYSTEM**

(30) Priority: 20.10.2017 KR 20170136694; 18.10.2018 KR 20180124652
(71) Applicant: CK Materials Lab Co., Ltd., Seoul 08380 (KR)
(72) Inventor: KIM, Hyeong Jun, Seoul 08380 (KR); LEE, Jong Hun, Seoul 08380 (KR); SON, Ki Suk, Seoul 08380 (KR); KIM, Min Ho, Seoul 08380 (KR)
(74) Representative: Hartley, Andrew Colin
(86) International application number: PCT/KR2018/012400
(87) International publication number: WO 2019/078669

(57) **Abstract**

The present invention relates to a haptic information providing system. A haptic information providing system according to the present invention comprises: a station for generating haptic pattern data on the basis of an input signal; and a haptic device for receiving haptic pattern data from the station, generating a haptic stimulus, and transmitting the generated haptic stimulus to a user.

## Description

### Technical Field

The present invention relates to a haptic information providing system. More specifically, the present invention relates to a haptic information providing system including a station and a haptic device, which can provide a user with rhythm, time, beat, and the like as sensible haptic patterns.

### Background

In modern life, a dependence of information delivery methods on visual and auditory means is increasing day by day. In using a portable terminal, such as a smartphone or a smart watch, it is common for a user to obtain most information through a display or a speaker of the terminal. Since the provision of information through such visual and auditory means may be limited depending on a surrounding environment or the individual's concentration at the time of receiving the information, for example, when the individual concentrates on a particular situation or when the surroundings are noisy, there is a need for a research on a haptic information providing system that can deliver information sensibly and emotionally without relying on visual or auditory means.

### Technical Problem

Therefore, an objective of the present invention is to contribute to the activation of more diverse cultural music content, media, and performances by transferring rhythm, time, beat, and the like to a user in sensible haptic patterns.

Also, another objective of the present invention is to expand cultural accessibility, thereby allowing for sharing various cultural contents between non-disabled people and people with visual or hearing impairment.

In addition, still another objective of the present invention is to transfer a variety of educational musical rhythm patterns, time, and beats, instead of or together with sound, to people with visual or hearing impairment or with developmental disorder or children through educational content based on a professional musical rhythm teaching method using a station and a haptic device associated therewith, thereby helping them to practice speaking while feeling music, learn music, gain emotional stability, actively conduct social participation activities, and the like.

### Technical solution

One objective of the present invention is achieved by a haptic information providing system including a station configured to generate haptic pattern data on the basis of an input signal; and a haptic device configured to receive the haptic pattern data from the station, generate a haptic stimulus, and transmit the haptic stimulus.

The station may generate the haptic pattern data on the basis of the input signal which includes at least one of force application data, content data, and event effect data.

The station may include a receiving unit configured to receive the input signal; at least one touch panel unit configured to receive an external force; a haptic pattern data generating unit configured to convert the input signal to generate the haptic pattern data; and a transmission unit configured to convert the haptic pattern data into wireless data and transmit the wireless data to the haptic device.

The station may further include a pattern selecting unit configured to provide a plurality of buttons and each of the buttons of the pattern selecting unit instantaneously implements pre-stored haptic pattern data.

The station may further include a visualization unit and the visualization unit may generate light corresponding to the haptic pattern data.

The light emitted from the visualization unit may correspond to at least one of an intensity of force, included in the haptic pattern data, to be applied to the touch panel unit, and rhythm, time, and beat of content or of an event effect.

A plurality of users may wear the haptic device and a haptic stimulus based on specific haptic pattern data may be transferred to a specific user or a specific user group.

The haptic device may include a receiving unit configured to receive wireless data; a haptic transmitter control unit configured to generate a control signal for controlling a haptic transmission unit on the basis of haptic pattern data extracted from the wireless data; and at least one haptic transmission unit configured to generate a haptic stimulus.

The station may include a plurality of touch panel units, the haptic device may include a plurality of haptic transmission units, and the touch panel units and the haptic transmission units may match each other and operate according to their disposed positions.

An intensity of force received by the touch panel units may match an intensity of motion of the haptic transmission units.

The station may include a plurality of touch panel units, each user may wear a plurality of haptic devices, and the touch panel units and the haptic devices worn by each user may match each other according to their disposed positions.

The haptic transmission unit may operate corresponding to at least one of rhythm, time, and beat of content or event effect included in the haptic pattern data.

The haptic transmission unit may include one of an eccentric motor, a linear resonance actuator, a piezoelectric actuator, an electroactive polymer actuator, an electrostatic actuator.

The haptic transmission unit may include a haptic unit formed of magnetic particles and a matrix material and a magnetic field generating unit configured to apply a magnetic field.

The haptic transmission unit may have a first shape when not affected by a magnetic field, have a second shape when affected by a magnetic field, and transmit haptic information by repeating transformation between the first shape and the second shape.

The haptic unit may be in a shape of at least one of a fine projection, a hollow cylinder, a dome, a polyhedron, a plate, a leaf spring, a seesaw, and a tunnel.

The haptic device may further include a visualization unit and the visualization unit generates light corresponding to the haptic pattern data.

The haptic device may be in a shape of a band, a ring, a stick, or a glove.

The haptic stimulus may be at least one of vibration, brushing, constriction, hitting, pressing, tapping, tilting, and tickling.

### Advantageous Effects

According to the present invention configured as described above, a station and a haptic device are provided to provide rhythmic haptic sensations and lively beats of music to platform services and various media, such as concerts, musicals, plays, dance performances, movies, and the like.

Also, according to the present invention, content of a program for toddlers and children and a haptic technology are applied and extended together to help more realistic and intuitive information acquisition and rich emotional development.

In addition, according to the present invention, haptic rhythm instead of sound is provided to hearing or developmentally impaired people by utilizing an education method and steps of the Orff music rhythm teaching method, thereby allowing the impaired people to understand rhythm, time, and intensity of beat of music. Accordingly, it is possible to increase sensory, psychological, educational, social, and cultural accessibility of speaking activities, poetry readings, playing musical instruments, body expression, group activities, dance performances, and the like for the hearing or developmental impaired people.

Moreover, according to the present invention, the haptic information providing system may be utilized in music and psychological education equipment and psychological therapy for people with hearing, visual, developmental, language, behavioral, mental, or physical impairment, and be utilized in devices for music and psychological therapy for non-disabled people.

### Description of Drawings

FIG. 1 is a schematic diagram illustrating a configuration of a haptic information providing system according to one embodiment of the present invention.
FIG. 2 is a diagram for describing an example of an operation of the haptic information providing system according to one embodiment of the present invention.
FIG. 3 is a schematic diagram illustrating a station according to one embodiment of the present invention.
FIG. 4 is an exploded perspective view of the station according to one embodiment of the present invention.
FIG. 5 is a schematic diagram illustrating a haptic device according to one embodiment of the present invention.
FIG. 6 is an exploded cross-sectional view of the haptic device according to one embodiment of the present invention.
FIG. 7 illustrates schematic diagrams showing haptic devices 300' and 300" according to another embodiment of the present invention.
FIG. 8 is a diagram illustrating a schematic configuration of a haptic transmission unit according to one embodiment of the present invention.
FIGS. 9 to 14 are diagrams illustrating shapes and haptic provisions of the haptic transmission unit according to various embodiments of the present invention.
FIG. 15 is a schematic diagram illustrating an operation configuration of a station according to one embodiment of the present invention.
FIG. 16 is a schematic diagram illustrating an operation configuration of a haptic device according to one embodiment of the present invention.
FIGS. 17 and 18 are schematic diagrams illustrating operation forms of a haptic information providing system according to various embodiments of the present invention.
FIG. 19 illustrates graphs showing operation signals of the haptic transmission unit for event effects according to one embodiment of the present invention.

### Description of Reference Numerals

100: HAPTIC INFORMATION PROVIDING SYSTEM
110: CONTENT
200: STATION
210: HOUSING
220: TOUCH PANEL UNIT
230: PATTERN SELECTING UNIT
240: COMMUNICATION UNIT
250: CONTROL UNIT
260: VISUALIZATION UNIT
300: HAPTIC DEVICE
310: HOUSING
320: HAPTIC TRANSMISSION UNIT
330: CONTROL UNIT
D: INPUT SIGNAL
D1: FORCE APPLICATION DATA
D2: CONTENT DATA
D3: EVENT EFFECT DATA

### Mode for Invention

The accompanying drawings, which show embodiments for illustrative purposes only, will be referred to. The embodiments will be described in sufficient detail for one of ordinary skill in the art to understand the present invention. It should be understood that various embodiments of the present invention may differ from each other but need not be mutually exclusive. For example, particular shapes, structures and characteristics disclosed herein may be embodied in other embodiments without departing from the spirit and scope of the present invention. Furthermore, the position or arrangement of individual elements in each embodiment disclosed herein may change without departing from the spirit and scope of the present invention. Accordingly, the following detailed description is not intended to be restrictive, and the scope of the present invention is determined only by the accompanying claims along with equivalents of what is claimed by the claims, if properly explained. In the drawings, like reference numerals denote like elements and lengths, areas, thicknesses or shapes may be exaggerated for the sake of convenience.

The following description is given of embodiments of the present invention with reference to the attached drawings in such a manner that the present invention can be easily carried out by one of ordinary skill in the art.

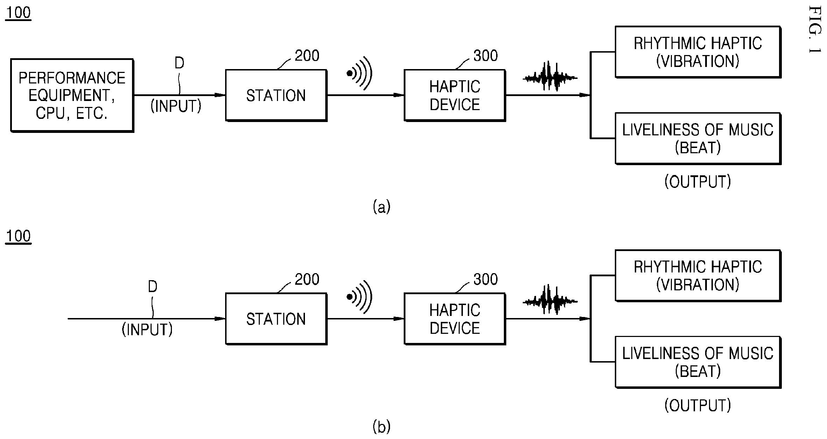

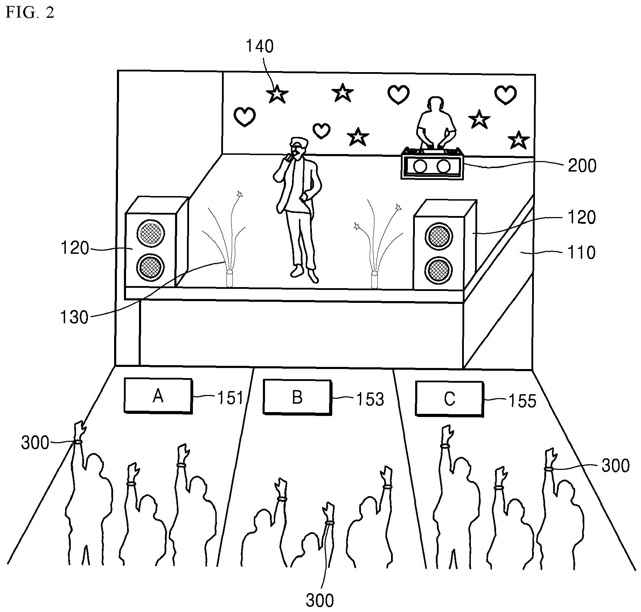

FIG. 1 is a schematic diagram illustrating a configuration of a haptic information providing system 100 according to one embodiment of the present invention. FIG. 2 is a diagram for describing an example of an operation of the haptic information providing system 100 according to one embodiment of the present invention.

Referring to FIGS. 1 and 2, the haptic information providing system 100 of the present invention may include a station 200 and a haptic device 300. Input signals D (D1, D2, and D3) received by the station 200 may be transmitted to the haptic device 300, which includes a smart haptic band, to implement various sensible haptic patterns. Here, the input signal D may mean data related to rhythm, time, beat, and the like transferred to the station 200 from an external device, such as performance equipment, a central processing unit (CPU), a terminal, a server, or the like. Also, the input signal D may refer to a series of forms of loading data on rhythm, time, beat, and the like, which are directly input to the station 200, and data on rhythm, time, beat, and the like, which are pre-stored in the station 200.
(a) of FIG. 1 illustrates an associatively operating type in which an external device, such as performance equipment or a CPU transmits the input signal D related to rhythm, time, beat, and the like to the station 200. The station 200 may convert the signal D into haptic pattern data and transmit the haptic pattern data to the haptic device 300 to output rhythmic haptic (vibration) and/or liveness of music (beat).
(b) of FIG. 1 illustrates an independently operating type in which a user directly inputs and/or loads the input signal D related to rhythm, time, beat, and the like through a touch panel unit 220, a pattern selecting unit 230, and the like of the station 200. The station 200 may convert the signal D into haptic pattern data and transmit the haptic pattern data to the haptic device 300 to output rhythmic haptic (vibration) and/or liveness of music (beat).

Referring to FIG. 2, the haptic information providing system 100 of the present invention may provide a haptic stimulus corresponding to content 110 provided to content consumers through the station 200 and the haptic device 300, thereby providing a higher level of immersion. The content 110 provided to the content consumers may be a concert performance of a signer, a sports event, or the like, but is not limited thereto. The content 110 may include event elements, such as stage effects 130 including firecrackers, fog, and the like, and stage backgrounds 140, as well as audio elements transmitted through an acoustic device 120. For example, while the content 110, such as a concert performance, is being presented, the content consumers may experience a higher level of immersion to the content 110 through a haptic stimulus provided through the haptic device 300, such as a band, a cheer stick, or the like. The haptic devices 300 may provide a specific haptic stimulus to the content consumers.

The station 200 may generate the haptic pattern data from the input signal D which includes at least one of force application data D1, content data D2, and event effect data D3.

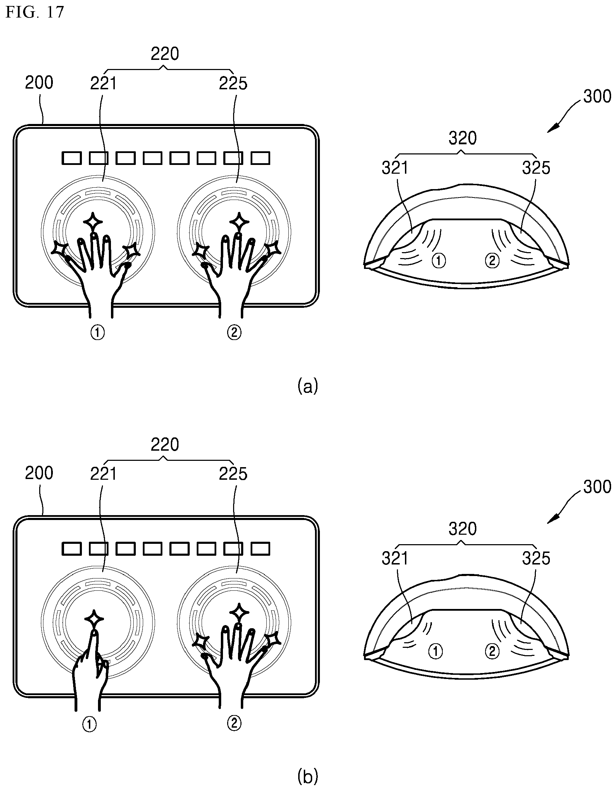

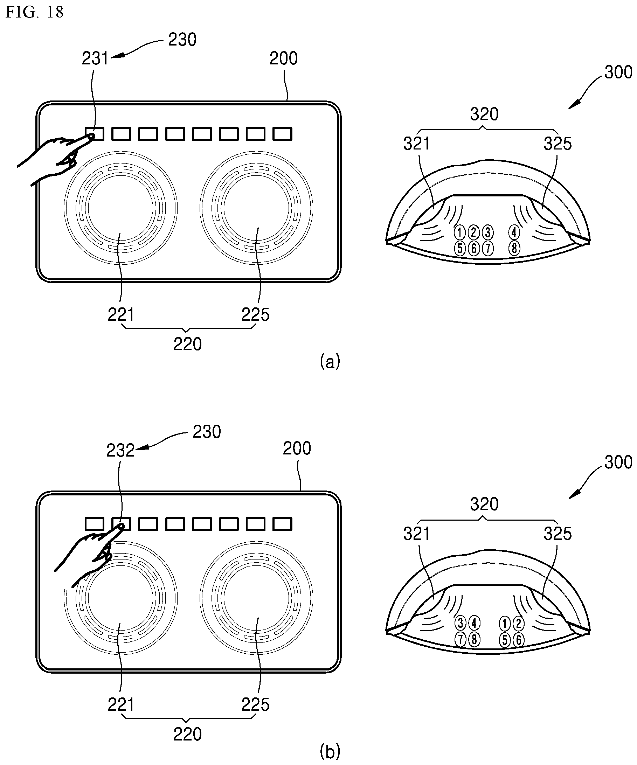

For example, the haptic device 300 may provide a haptic stimulus to users of the haptic devices on the basis of haptic pattern data corresponding to the intensity of force and/or the direction of force (force application data D1) applied to the station 200. The haptic stimulus may be provided to the users of the haptic devices 300 in such a manner that the direction of the left and/or right touch panel units 220 of the station 200 and the intensity of the applied force correspond to the directionality and vibration intensity of the haptic devices 300. The haptic pattern data corresponding to the intensity of force and/or the force application direction may be generated in real time, or may be a preset and/or pre-input data (see FIGS. 17 and 18).

In another example, the haptic device 300 may provide a haptic stimulus of a specific pattern to the haptic device users on the basis of haptic pattern data corresponding to an audio signal of the content data D2 provided. For example, the haptic device 300 may provide the user with a haptic stimulus corresponding to a beat pattern of a song in a concert performance. In addition, when the haptic device 300 is used in a baseball game, the haptic device 300 may provide a user with a haptic stimulus corresponding to the hitting sound of a batter hitting a baseball.

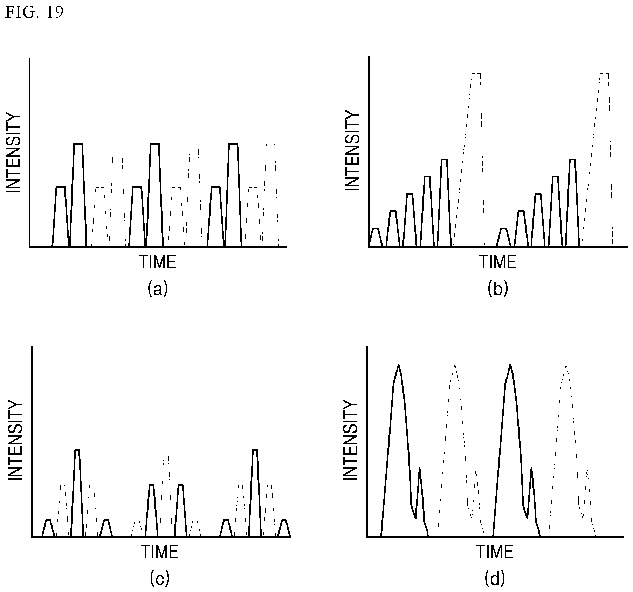

In still another example, the haptic device 300 may provide a haptic stimulus to the haptic device users on the basis of haptic pattern data corresponding to a specific beat pattern (event effect data; D3) for creating an event effect. For example, the event effect may include an effect corresponding to a singer's specific gesture at a concert, a raining effect, an effect for creating a specific mood (e.g., an enthusiastic mood, a gloomy mood, or the like), a heartbeat effect, a lighting effect, and so on, but is not limited thereto. The haptic device 300 may provide the user with a predetermined haptic stimulus corresponding to a specific beat pattern for creating an event effect (see FIG. 19).

The haptic devices 300 may be classified into groups 151, 153, and 155 of the user on the basis of identification data thereof. The haptic device 300 may receive different haptic pattern data according to the classified user groups 151, 153, and 155, and provide a haptic stimulus of a different pattern to the users on the basis of the received haptic pattern data.

It is assumed that the haptic devices 300 are classified into user group A 151, user group B 153, and user group C 155 on the basis of the identification data of each haptic device 300. For example, the haptic device 300 classified as the user group A 151 may provide a haptic stimulus corresponding to a beat pattern of a bass to the users of the user group A 151, the haptic device 300 classified as the user group B 153 may provide a haptic stimulus corresponding to a beat pattern of a drum to the users of the user group B 153, and the haptic device 300 classified as the user group C 155 may provide a haptic stimulus corresponding to a beat pattern of a melody to the users of the user group C 155.

Hereinafter, the station 200 and the tactile device 300 will be described in detail.

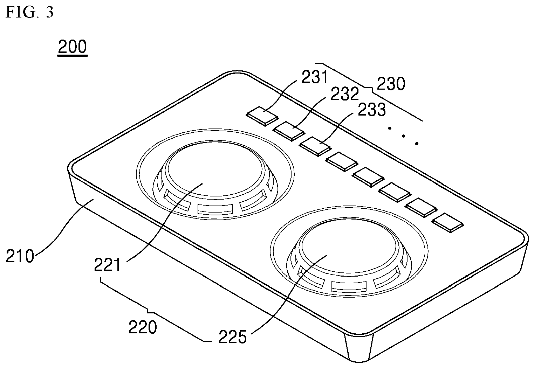

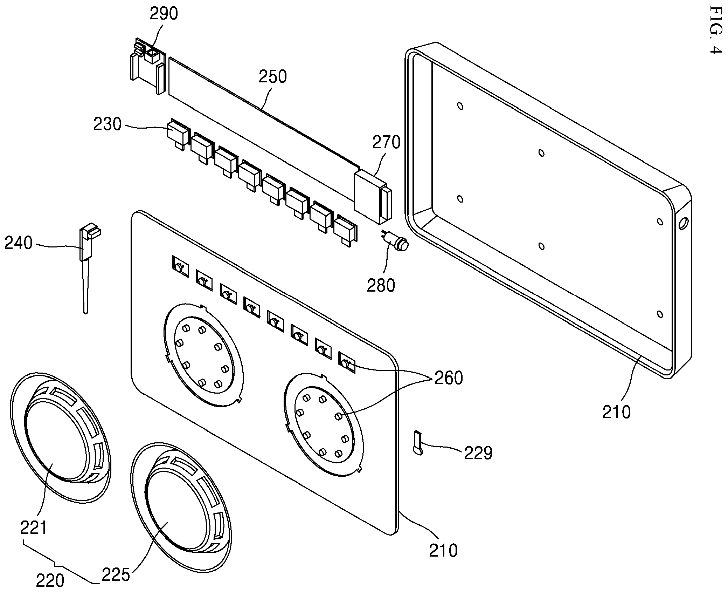

FIG. 3 is a schematic diagram illustrating a station 200 according to one embodiment of the present invention. FIG. 4 is an exploded perspective view of the station 200 according to one embodiment of the present invention.

Referring to FIGS. 3 and 4, the station 200 may include a housing 210, a touch panel unit 220, a pattern selecting unit 230, a communication unit 240, a control unit 250, and a power supply unit 270, and a switch unit 280. In addition, the station 200 may further include a visualization unit 260 and an auxiliary data input unit 290.

The housing 210 may be configured with upper and lower housings coupled to each other and provide an internal space for accommodating the control unit 250, the power supply unit 770, the switch unit 280, and the like. The housing 210 may have a thick plate shape, but is not limited thereto.

The touch panel unit 220 is a portion where a station user inputs an external force. At least one touch panel unit 220 may be provided in the station 200, but a plurality of touch panel input units 220 (221 and 225) may be preferably provided in order to give directionality to each of the touch panel units 220. Hereinafter, it is assumed that two left and right touch panel units 221 and 225 are provided, but it should be noted that the present invention is not limited thereto.

The touch panel units 220 may designate the intensity and/or direction of a force applied by the user as an input signal D (or force application data D1). In other words, the force application data D1 may include a series of data on which of the touch panel units 221 and 225 has received an input and at what intensity the input has been received. To this end, a separate sensor 229 for quantifying the intensity of the force input by the user may be further provided, but a function of sensing the intensity of the force may be embedded in the touch panel 220 itself.

The pattern selecting unit 230 may be provided with a plurality of buttons 231, 232, and 233 on a top surface of the station 200. The station 200 may store various haptic pattern data in advance in a storage unit (not shown). Alternatively, various haptic pattern data may be provided through the auxiliary data input unit 290 using a storage device, such as a universal serial bus (USB).

Each of the buttons 231, 232, and 233 of the pattern selecting unit 230 may correspond to each of the haptic pattern data and the haptic pattern data may be immediately implemented as the user of the station 200 presses a corresponding button 231, 232, or 233. Here, the implementation of the haptic pattern data may be understood to include not only operating a haptic transmission unit 320 of the haptic device 300, but also implementing a specific sound in the acoustic device 120, or implementing a specific event element, such as a specific stage effect 130 or the stage background 140.

The communication unit 240 may serve as a receiving unit/transmission unit. A communication type used by the communication unit 240 may be any type, such as wireless or wired type, and various known communication networks may be used without limitation. The communication unit 240 may serve as a receiving unit that receives the input signal D, for example, the force applying data D1, from the touch panel unit 220 or receives the content data D2 and the event effect data D3 from the external device, such as performance equipment, a CPU, or the like. In addition, the communication unit 240 may serve as a transmission unit for converting haptic pattern data corresponding to the input signals D (D1, D2, and D3) into wireless data and transmitting the wireless data to the haptic device 300.

The control unit 250 may include a circuit for mediating signal transmission of each component of the station 200 and controlling each component. The control unit 250 may include a haptic pattern data generator that converts the input signals D (D1, D2, and D3) to generate haptic pattern data.

The visualization unit 260 may generate light corresponding to the haptic pattern data. For example, the visualization unit 260 may be configured to include a light emitting means, such as a light emitting diode (LED) and the like. The visualization unit 260 may be disposed inside the touch panel unit 220 and the pattern selecting unit 230. In one example, the visualization unit 260 may generate light corresponding to the event of a force being applied to the touch panel unit 220 or the event of the pattern selecting unit 220 being pressed. In another example, the visualization unit 260 may generate light corresponding to rhythm, time, and beat included in the audio elements of the content 110. In still another example, the visualization unit 260 may generate light corresponding to the event effects 130 and 140. Accordingly, there is an advantage that the station 200 can also contribute to creating aesthetic elements of the content 110.

In addition, the power supply unit 270 and the switch unit 280 may be further provided to supply power necessary for the operation of the station 200 and to turn on/off the operation. Also, various haptic pattern data may be provided through the auxiliary data input unit 290 using a storage device, such as a USB.

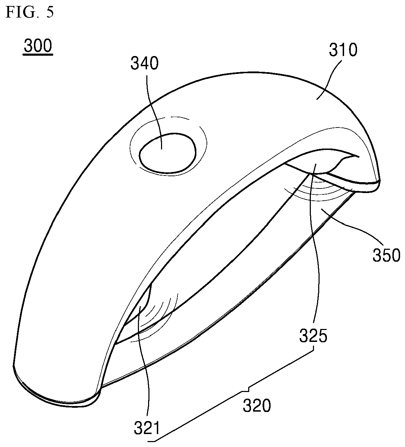

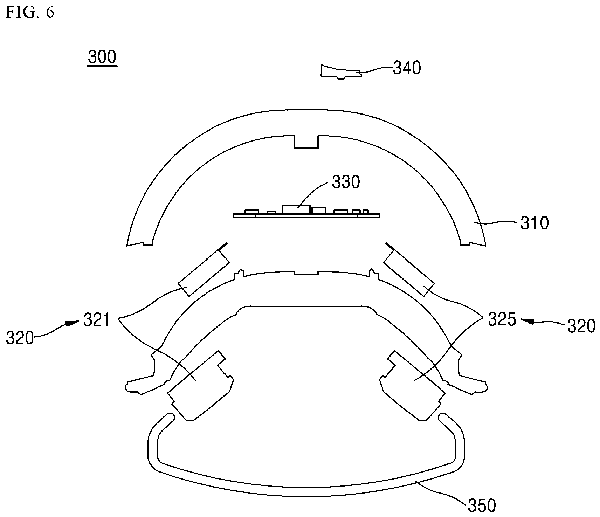

FIG. 5 is a schematic diagram illustrating a haptic device 300 according to one embodiment of the present invention. FIG. 6 is an exploded cross-sectional view of the haptic device 300 according to one embodiment of the present invention. In FIGS. 5 and 6, the haptic device 300 which is in a band shape and is provided with a haptic sensation by being worn on a wrist, arm, or the like of a user will be described.

The haptic device 300 outputs an input signal D input to a station 200 as various haptic sensations. The haptic device 300 may include a housing 310, a haptic transmission unit 320, a control unit 330, and a switch unit 340. In addition, a fastening unit 350 which enables the haptic device 300 to be fastened to and to be in close contact with a human body may be further included.

The housing 310 may be configured with upper and lower housings coupled to each other, and may provide an internal space for accommodating the control unit 330, the haptic transmission unit 320, and the like. The housing 310 may have a shape that can be placed on a wrist, an arm, or the like, for example, a watch shape, a band shape, or the like.

The haptic transmission unit 320 may provide a haptic stimulus (haptic information) to the user according to wireless data converted by the control unit 330. In this specification, the haptic stimulus is described as a vibration, but the haptic stimulus should be understood to include not only haptic sensations such as vibration, brushing, constriction, hitting, pressing, tapping, tilting, or tickling but also emotions, feelings, etc. transferred via haptic sensations.

The haptic transmission unit 320 may include a motor or an actuator to transmit haptic information by generating vibration. Specifically, the haptic transmission unit 320 may use an inertial actuator that includes an eccentric motor which vibrates with an eccentric force generated when the motor rotates and a linear resonance actuator which maximizes the intensity of vibration using a resonance frequency. In addition, the haptic transmission unit 320 may use a piezoelectric actuator which is in the shape of a beam or a disk and is driven using a piezoelectric element whose size or shape changes instantaneously in response to an electric field, an electroactive polymer actuator which generates vibration by repeated movement of a mass body attached onto an electroactive polymer film, and an electrostatic actuator which is driven using a repulsive force generated when the same type of charge as an attraction force generated between two sheets of glass filled with different charges is charged. In addition, a known motor or actuator may be used.

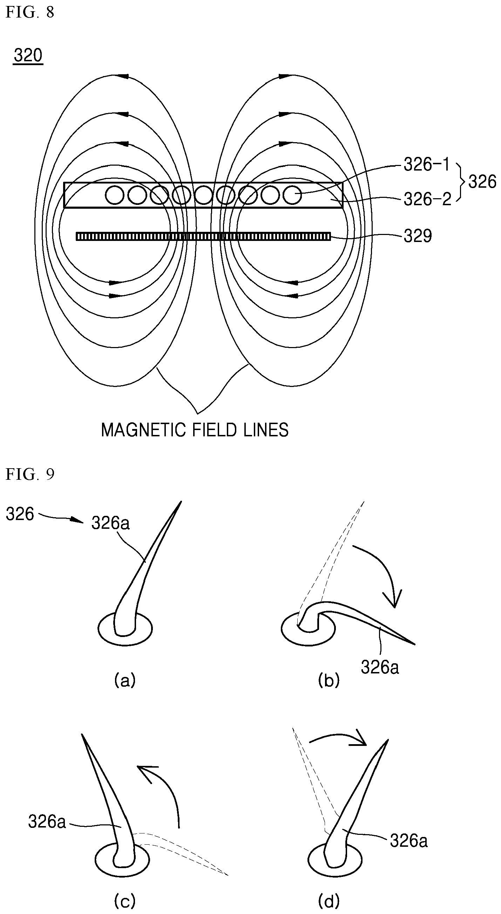

Alternatively, the haptic transmission unit 320 may be formed of magnetic particles, for example, nano- or micron-scale iron or ferrite particles, and a matrix material, for example, rubber or other polymer material. In addition, a magneto-Rheological Elastomer (MRE) may be used as the haptic transmission unit 320. Details will be described below with reference to FIGS. 8 to 14.

The haptic transmission unit 320 may be disposed on a surface that is in contact with the user of the haptic device 300 to directly transmit the haptic stimulus. For example, all or some of the components of the haptic transmission unit 320 may be disposed on an outer surface of the housing 310. On the other hand, the haptic transmission unit 320 may be disposed inside the housing 310 to indirectly provide a haptic stimulus, such as vibration and tapping, to the user.

At least one haptic transmission unit 320 may be provided in the haptic device 300, but a plurality of haptic transmission units 320 (321 and 325) may be preferably provided in order to give directionality to each of the haptic transmission units 320. In particular, it is preferable that the plurality of haptic transmission units 320 are provided such that each of the touch panel units 220 can be matched with each of the haptic transmission units 320, for example, in a one-to-one relationship, a one-to-many relationship, or a many-to-many relationship, depending on the mutually disposed positions. Hereinafter, it is assumed that two left and right haptic transmission units 320 (321 and 325) are provided to match with the two provided left and right touch panel units 221 and 225, but it should be noted that the present invention is not limited thereto.

Meanwhile, a user may wear a plurality of haptic devices 300, rather than only one haptic device 300. For example, a user may wear the haptic device 300 on each of the left and right arms, the haptic transmission unit 320 of the haptic device 300 worn on the left arm may be operated, matching with the touch panel unit 221 on the left side, and the haptic transmission unit 320 of the haptic device 300 worn on the right arm may be operated, matching with the touch panel unit 225 on the left side.

Each of the haptic transmission units 320 may transmit different haptic information to the user as the haptic transmission unit 320 operates in response to different haptic pattern data. This will be described beloiw.

The control unit 330 may include a circuit for mediating signal transmission of each component of the haptic device 300 and controlling each component. The control unit 330 may include a function of a receiving unit that receives wireless data transmitted from the station 200. A separate receiving unit may be provided. The control unit 330 may extract the haptic pattern data from the wireless data, and generate a control signal for controlling the haptic transmission unit 320 based on the extracted haptic pattern data.

In addition, a power supply unit (not shown), such as a battery, and a switch unit 340 may be further included to supply power necessary for the operation of the haptic device 300 and to turn on/off the operation.

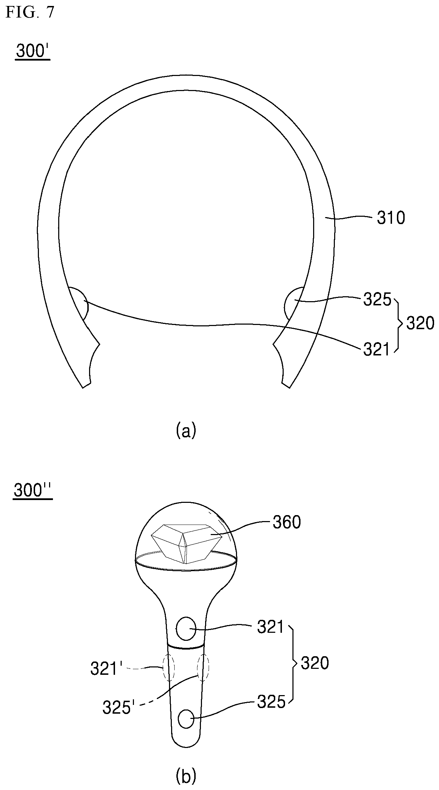

FIG. 7 illustrates schematic diagrams showing haptic devices 300' and 300" according to another embodiment of the present invention.

Referring to (a) of FIG. 7, the haptic device 300' may have a neck-band shape. A housing 310 is formed in a shape that allows the haptic device 300' to be hung on a neck and tactile transmission units 320 (321 and 325) may be disposed on both ends of the housing 310 to be in contact with the user's neck, collarbone, chest, and the like.

Referring to (b) of FIG. 7, the haptic device 300" may have a cheer stick shape. The housing 310 may be formed in a shape that allows a user to hold the tactile device 300" and haptic transmission units 320 (321 and 325) may be disposed on upper and lower portions of the haptic device 300" so that the user can easily detect the directionality of a haptic stimulus. Alternatively, haptic transmission units 320 (321' and 325') may be disposed on the left and right sides of the haptic device 300".

In addition, the haptic device 300 may employ, without limitation, a shape that can be placed on a part of the user's body, such as a ring, a band, a watch, or the like, a shape that can be worn on the user's body, such as a glove, a hat, or the like, or a shape that can be held, such as a cheer stick, a stick, or the like.

In addition, the haptic device 300 may further include a visualization unit 360. As shown in (b) of FIG. 7, the visualization unit 360 may generate light corresponding to haptic pattern data. For example, the visualization unit 360 may be configured to include a light emitting means, such as an LED and the like. For example, the visualization unit 360 may generate light corresponding to the operation of the tactile transmission unit 320. In another example, when a force is applied to a touch panel unit 220 or when a pattern selecting unit 230 is pressed, light may be generated corresponding thereto or corresponding to the rhythm, time, and beat included in the audio element of content 110. Accordingly, there is an advantage that the haptic device 300 can contribute to constituting aesthetic elements of the content 110 (for example, the haptic device 300" in a shape of a cheer stick decorates an audience seat by generating a variety of lights during a concert).

FIG. 8 is a diagram illustrating a schematic configuration of a haptic transmission unit 320 according to one embodiment of the present invention. FIGS. 9 to 14 are diagrams illustrating shapes and haptic provisions of the haptic transmission unit 320 according to various embodiments of the present invention. FIGS. 8 to 14 illustrate cases other than a case in which the haptic transmission unit 320 uses a motor or an actuator.

Referring to FIG. 8, the tactile transmission unit 320 may include a haptic unit 326 composed of magnetic particles 326-1 and a matrix material 326-2 and a magnetic field generating unit 329 which applies a magnetic field to the haptic unit 326.

The haptic unit 326 (326a to 326e) may be formed of the magnetic particles 326-1, for example, nano- or micron-scale iron or ferrite particles, and the matrix material 326-2, for example, rubber or other polymer material. In addition, the haptic unit 326 may be an MRE. The MRE is an elastic material including particles capable of reacting to an external magnetic field. Since the MRE includes magnetic particles that can be magnetized in response to an external magnetic field, properties thereof, such as stiffness, tensile strength, elongation rate, and the like, may be changed by the application of an external magnetic field. The haptic unit 326 may be in the shape of at least one of a fine projection, a hollow cylinder, a polyhedron, such as a dome, a plate, a seesaw, and a tunnel.

The magnetic field generating unit 329 is positioned above or below the haptic unit 326 to form a magnetic field, and the magnetic particles 326-1 in the haptic unit 326 react to the magnetic field. In addition, at least one of a flat coil and a solenoid coil may be used as the magnetic field generating unit 329 and the magnetic field generating unit 329 may generate an alternating current magnetic field when an alternating current is applied in a size and shape corresponding to the haptic unit 326, and generate a direct current magnetic field when a direct current is applied. In particular, magnetic field lines of a magnetic field generated by the magnetic field generating unit 329 are schematically illustrated in FIG. 8.

Also, the magnetic field generating unit 329 may have a position and a shape corresponding to the haptic unit 326, the shape of the haptic unit 326 may be changed by a magnetic field generated by the magnetic field generating unit 329, and the magnetic field generating unit 329 may transmit haptic information according to the change in shape of the haptic unit 326. The haptic information may vibration, brushing, tightening, hitting, pressing, tapping, tilting, tickling, and the like.

The haptic transmission unit 320 may be a motor or an actuator to transmit the haptic information by generating vibration. Specifically, the haptic transmission unit 320 may use an inertial actuator that includes an eccentric motor which vibrates with an eccentric force generated when the motor rotates and a linear resonance actuator which maximizes the intensity of vibration using a resonance frequency. In addition, the haptic transmission unit 320 may use a piezoelectric actuator which is in the shape of a beam or a disk and is driven using a piezoelectric element whose size or shape changes instantaneously in response to an electric field, an electroactive polymer actuator which generates vibration by repeated movement of a mass body attached onto an electroactive polymer film, and an electrostatic actuator which is driven using a repulsive force generated when the same type of charge as an attraction force generated between two sheets of glass filled with different charges is charged. The motor or the actuator is known art and thus a detailed description thereof will be omitted.

Referring to FIG. 9, the haptic unit 326 of the haptic transmission unit 320 according to a first embodiment may have a shape of a fine projection 326a. The shape of the fine projection 326a may have a thickness of about 25 µm or less to resemble fleece or the like, or about 100 µm or less to resemble human hair or the like in order to provide a haptic sensation precisely and emotionally.

As shown in (a) of FIG. 9, when not affected by an external magnetic field, the fine projection 326a may maintain a slightly inclined shape (a first shape). Alternatively, the fine projection has a shape that remains straight and vertical without inclination. Then, as shown in (b) of FIG. 9, when affected by an external magnetic field, the fine projection 326a may be further inclined or remain even in a horizontal shape (a second shape). Then, as shown in (c) and (d) of FIG. 9, when the fine projection 326a is not affected by the external magnetic field after the application of the magnetic field is ceased, the fine projection 326a may return to the first shape from the second shape and produce a reciprocating motion by its own elastic force (or restoring force). Therefore, a haptic sensation similar to brushing or tickling may be transferred by the fine projection 326a moving in a reciprocating motion.

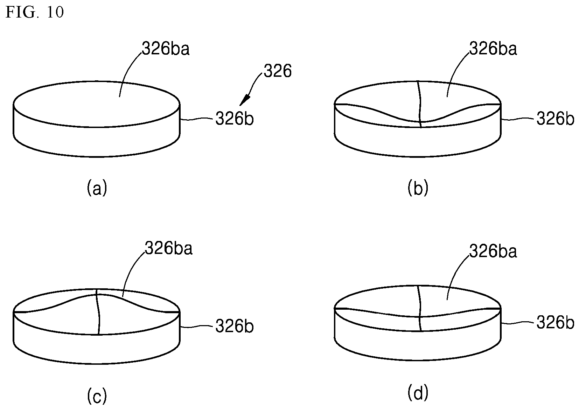

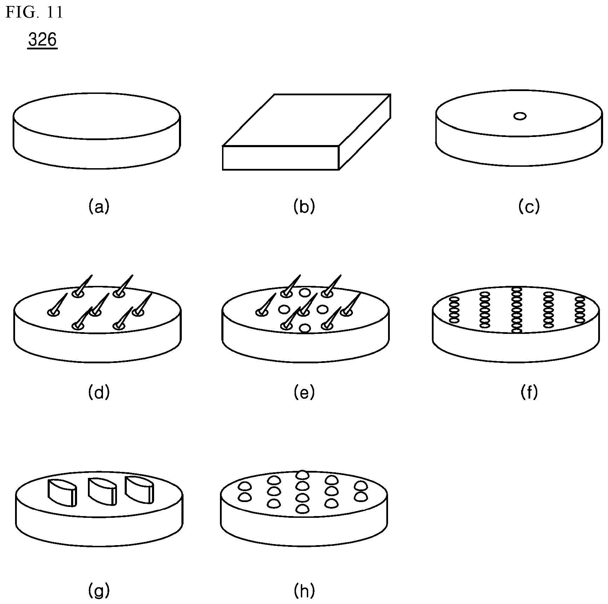

Referring to FIG. 10, the haptic unit 326 of the haptic transmission unit 320 according to a second embodiment may be in the shape of a hollow cylinder 326b, a dome, or a polyhedron (see (b) of FIG. 11).

As shown in (a) of FIG. 10, when not affected by an external magnetic field, the hollow cylinder 326b may have a top surface 326ba, which is flat (a first shape). Then, as shown in (b) of FIG. 10, when not affected by an external magnetic field, the top surface 326ba of the cylinder 326b may subside into the empty internal space (a second shape). Then, as shown in (c) and (d) of FIG. 10, when the cylinder 326b is not affected by an external magnetic field after the application of the magnetic field is ceased, the top surface 326ab of the cylinder 326b may return from the second shape to the first shape and produce a reciprocating motion by its own elastic force (or restoring force). Therefore, a haptic sensation similar to tapping and a haptic sensation of vibration may be transferred by the top surface 326ba moving in a reciprocating motion.

At least one of the degree (amount), direction, and frequency of the transformation from the first shape to the second shape may be controlled by controlling at least one of the intensity, direction, and frequency of a magnetic field generated by the magnetic field generating unit 329. For example, if a stronger magnetic field is applied, the haptic unit 326 will be inclined more, thereby transferring a stronger haptic sensation. In addition, for example, if the frequency of the magnetic field is changed, the speed of transformation of the haptic unit 326 from the first shape to the second shape and then back to the first shape also changes, thereby transferring various types of haptic sensations.

FIG. 11 is a diagram illustrating various shapes of the haptic transmission unit 320 according to one embodiment of the present invention.

(1) (a) of FIG. 11 shows a hollow cylinder, (2) (b) of FIG. 11 shows a hollow hexahedron (or polyhedron), (3) (c) of FIG. 11 shows a hollow cylinder 20 with a top surface wherein micro-holes are provided, capable of increasing the durability of the haptic unit 326 by allowing air to smoothly enter and exit through the micro-holes while the top surface moves in a reciprocating motion, (4) (d) of FIG. 11 shows a combined shape of fine projections and the hollow cylinder, (5) (e) of FIG. 11 shows a shape identical to the shape of (d) of FIG. 11, except that a plurality of micro-holes are provided in the top surface of the cylinder, (6) (f) of FIG. 11 shows a shape identical to the shape of (c) of FIG. 11, except that a plurality of micro-holes are provided, (7) (g) of FIG. 11 shows a hollow cylinder with a top surface wherein various structures (e.g., hollow cylinders smaller than the cylinder) are combined, and (8) (h) of FIG. 11 shows a hollow cylinder with a top surface wherein dome-shaped embossed structures are provided.

As described above, according to the present invention, various types of haptic sensations, such as brushing, tickling, tapping, etc. may be transferred in multiple ways by configuring the haptic transmission unit 320 in various shapes.

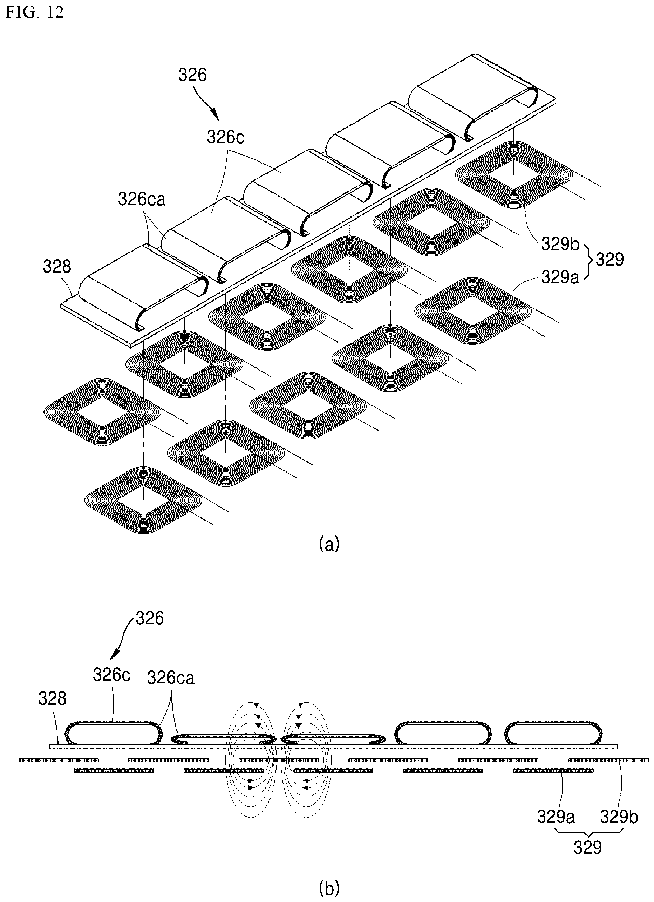

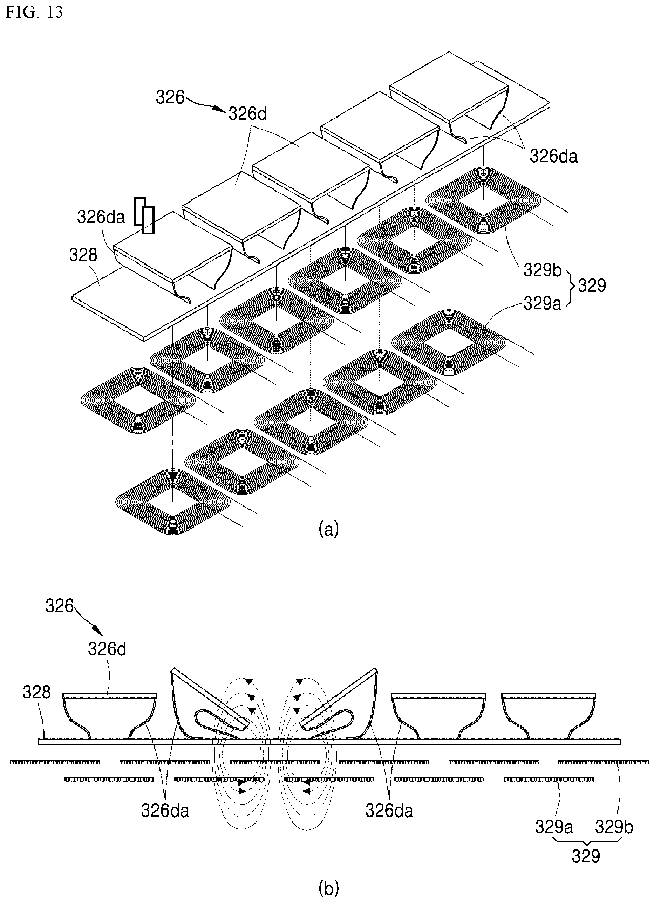

Referring to FIGS. 12 and 13, the haptic unit 326 according to third and fourth embodiments may include a plurality of haptic units 326c and 326d and supporters 326ca and 326da to define at least one cell, a plurality of cells may be disposed on an insulator 328 at equal distances from each other, and coil units of a plurality of magnetic field generating units 329, which are formed below the insulator 328 in shapes and positions corresponding to the cells , may be provided as a single layer or multiple layers 329a and 329b.

Here, the supporters 326ca and 326da (see FIGS. 12 and 13) may be understood as components provided between the haptic units 326c and 326d and the magnetic field generating unit 329 to ensure operating space for the haptic units 326ca and 326da. In addition, the supporters 326ca and 326da may be MREs and may have at least one of a curved shape and a wave shape.

The haptic units 326c according to the third embodiment are in the shape of a plate and the supporters 326ca may be formed integrally with the haptic units 326c on each side of the haptic units 326c and have a curved shape. The supporters 326ca are provided between the insulator 328 and the haptic units 326c and ensure operating space for the haptic units 326c or the supporters 326ca. For example, the haptic units 326c and the supporters 326ca move up and down by a magnetic field generated and produce a reciprocating motion involving a change in shape in response to a magnetic field generated by the magnetic field generating unit 329. The change in shape may cause the movement of one or all of the cells, thereby transferring various haptic sensations, such as vibration, hitting, tapping, and the like, to a user.

The haptic units 326d according to the fourth embodiment are in the shape of a plate and the supporters 326d are formed integrally with the haptic units 326d on each side of the haptic units 326d and have a wave shape. The supporters 326da are provided between the insulator 328 and the haptic units 326d and ensure operating space for the haptic units 326d. For example, a magnetic field is generated by the magnetic field generating unit 329, the supporters 326da made of an MRE may be transformed and one end of the haptic unit 326d may tilt toward the center of the magnetic field generating unit 329. When no magnetic field is generated by the magnetic field generating unit 239, the supporters 326da may return to an original shape by their own elastic force. That is, by applying a magnetic field to one or all of the cells, various types of haptic sensations, such as vibration, hitting, tapping, and tilting may be transferred to a user.

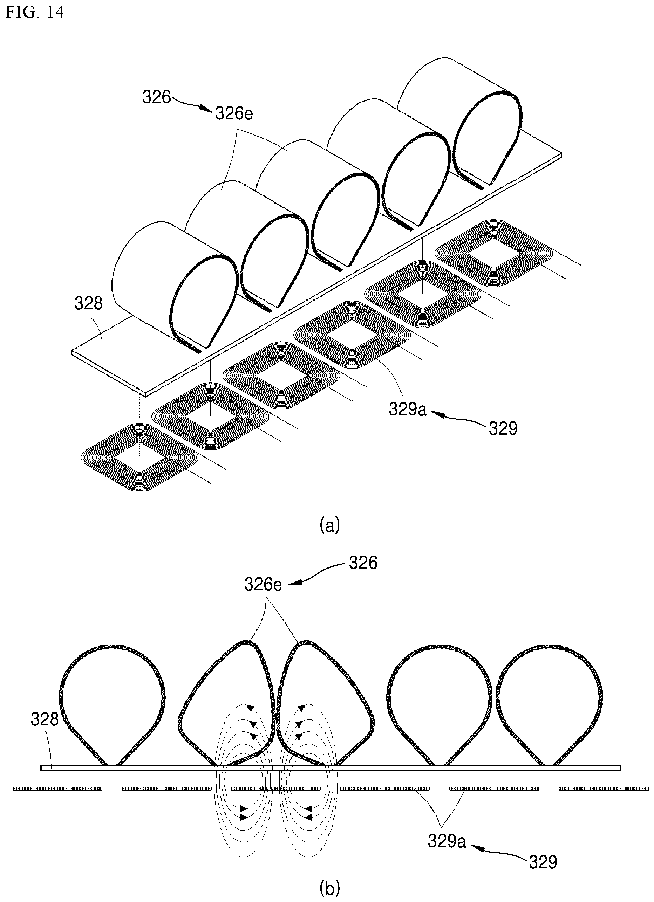

Referring to FIG. 14, a haptic unit according to a fifth embodiment may include a plurality of haptic units 236e to define at least one cell, a plurality of cells may be disposed on an insulator 328 at equal distances from each other, and coil units of a plurality of magnetic field generating units 329, which are formed below the insulator 328 in shapes and positions corresponding to the cells, may be provided as a single layer 329a or multiple layers.

Each of the haptic units 326e according to the fifth embodiment is in the shape of a tunnel and has an internal oval space. For example, when a magnetic field is generated by a magnetic field generating unit 329, the haptic unit 326e made of an MRE may be transformed, and one end of the haptic unit 326e may move toward the center of the magnetic field generating unit 329. When no magnetic field is generated by the magnetic field generating unit 329, the haptic unit 326e may return to an original shape by its own elastic force. That is, by applying a magnetic field to one or all of the cells, various types of haptic sensations, such as pinching and constriction, may be transferred to a user.

Although the haptic transmission unit 320 is described as being made of a material including the magnetic particles 142, typically an MRE, in the above description, it is noted that the haptic transmission unit 320 may also be made of an electrorheological elastomer (ERE) and may operate equivalently by applying an external electric field by an electric field generating unit instead of the magnetic field generating unit 329.

As described above, according to the present invention, various types of haptic sensations may be transferred more emotionally through various haptic transmission units 320.

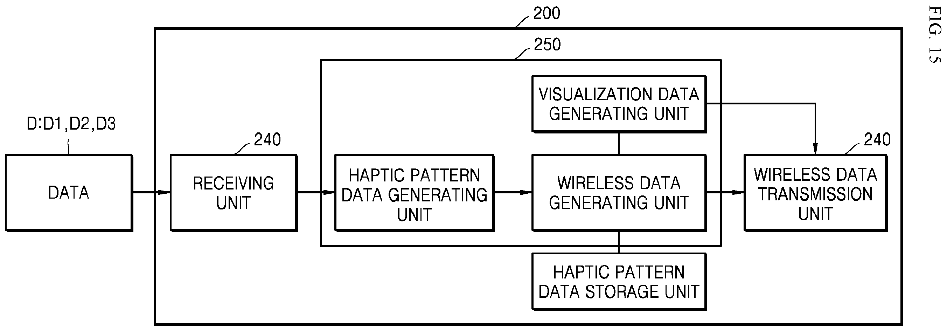

FIG. 15 is a schematic diagram illustrating an operation configuration of a station 200 according to one embodiment of the present invention.

A receiving unit (or a communication unit 240) of the station 200 may receive an input signal D including at least one of force application data D1, content data D2, and event effect data D3 for generating haptic pattern data.

A haptic pattern data generating unit in a control unit 250 may generate first haptic pattern data corresponding to a pattern applied to a touch panel unit 220 and/or a pattern of a pattern selecting unit 230 which are included in the force application data D1 and rhythm, time, and beat patterns of an audio signal included in the content data D2. For example, the pattern applied to the touch panel unit 220 may be a pattern applied by a user of the station 200 through left and right touch panel units 221 and 225 and the beat pattern of content 110 may be an audio beat pattern of an audio signal included in the content data D2 received through the receiving unit 240. The haptic pattern data generating unit may extract the audio beat pattern from the audio signal included in the content data D2 received through the receiving unit 240 and generate the first haptic pattern data corresponding to the extracted audio beat pattern.

According to another embodiment, the haptic pattern data generating unit may generate second haptic pattern data corresponding to specific rhythm, time, and beat patterns for creating event effects 130 and 140 included in the event effect data D3. For example, the event effects 130 and 140 may include a stage effect including firecrackers, fog, and the like, an effect corresponding to a singer's specific gesture at a concert, a raining effect, an effect for creating a specific mood (e.g., an enthusiastic mood, a gloomy mood, or the like), a heartbeat effect, a lighting effect, and so on, but is not limited thereto. The haptic pattern data generating unit may generate the second haptic pattern data corresponding to specific rhythm, time, and beat patterns for creating event effects 130 and 140 included in the event effect data D3. For example, if the event effects 130 and 140 are to create an enthusiastic mood, the haptic pattern data generating unit may generate the second haptic pattern data of a fast and intense beat pattern that can express an enthusiastic mood, in response to the pertinent event effects 130 and 140.

According to one embodiment, the haptic pattern data generating unit may generate first haptic pattern data which can be distinguished from one another by groups of haptic devices 300. The haptic pattern data generating unit may generate the first haptic pattern data that are distinguished from one another by groups 151, 153, and 155 of haptic devices 300 even for the same input signal D. For example, the haptic pattern data generator may generate the first haptic pattern data on the basis of content data D2 on a concert performance received through the receiving unit 240 such that haptic pattern data corresponding to a beat pattern of bass and haptic pattern data corresponding to a beat pattern of a drum are distinguished from each other by groups of the haptic devices 300. Also, the haptic pattern data generating unit may generate the second haptic pattern data that are distinguished from one another by the groups 151, 153, and 155 of the haptic devices 300.

A haptic pattern data storage unit may store haptic pattern data that is generated in advance by the haptic pattern data generating unit. For example, the haptic pattern data stored in the haptic pattern data storage unit may include the generated first and second haptic pattern data.

On the other hand, a pattern selecting unit 230 may be implemented as buttons 231, 232, and 233 that can immediately implement the first and second haptic pattern data stored in the haptic pattern data storage unit. As a user of the station 200 presses one of the plurality of buttons 231, 232, and 233 of the pattern selecting unit 230, a haptic sensation may be transferred by transmitting the first and second haptic pattern data to the haptic device 300.

A wireless data generating unit in the control unit 250 may generate wireless data which includes identification data of one or more haptic devices 300 to receive the haptic pattern data and haptic pattern data to be transmitted to the target haptic device 300.

According to one embodiment, the wireless data generating unit may generate wireless data which includes the first haptic pattern data generated in real time on the basis of the input signal D and identification data of one or more haptic devices 300 to receive the generated first haptic pattern data. According to another embodiment, the wireless data generating unit may generate wireless data which includes identification data of the haptic device 300 and at least one of the first haptic pattern data and the second haptic pattern data that are generated in advance and stored in the haptic pattern data storage unit. The wireless data generating unit may generate the wireless data by selecting at least one of the stored haptic pattern data corresponding to at least one of the received content data D2 and event effect data D3 without generating the haptic pattern data in real time.

The wireless data generated by the wireless data generating unit may further include operation control data related to the operation of the target haptic device 300. For example, the operation control data may include data for adjusting the haptic stimulation period, the haptic stimulus intensity, and the like of the haptic device 300.

A wireless data transmission unit (or a communication unit 240) may transmit the wireless data generated by the wireless data generating unit to the haptic device 300. The wireless data transmission unit may include a wireless communication chip capable of communicating through wireless communication channels of different frequency bands, and may transmit wireless data to a band through wireless communication channels of a plurality of frequency bands using a multichannel antenna. The wireless data transmission unit may ensure stability and reliability of wireless data transmission by transmitting the wireless data through wireless communication channels of a plurality of frequency bands.

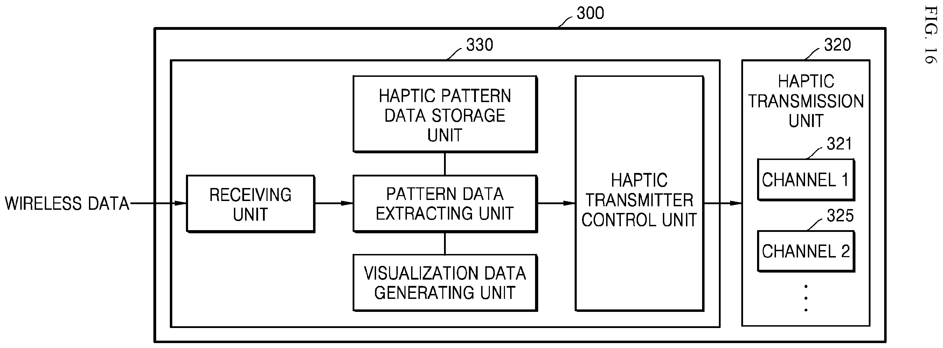

FIG. 16 is a schematic diagram illustrating an operation configuration of a haptic device 300 according to one embodiment of the present invention.

A receiving unit (included in a control unit 330) of the haptic device 300 may receive wireless data from a station 200. A haptic pattern data storage unit may store at least one of first haptic pattern data and second haptic pattern data.

A pattern data extracting unit in the control unit 330 may determine whether identification data of a haptic device 300 included in the wireless data matches identification data of the corresponding haptic device 300 and may extract pattern data only when it is determined that the two identification data match each other.

A haptic transmitter control unit in the control unit 330 may generate a control signal for controlling a haptic transmission unit 320 on the basis of the haptic pattern data extracted by the pattern data extracting unit. The haptic transmitter control unit may include a DC-DC converter unit for converting a voltage of a circuit into a higher voltage, a control circuit unit for generating a current on the basis of the voltage applied from the DC-DC converter unit and the haptic pattern data, and a switching control unit for generating a control signal in the form of current for controlling the haptic transmission unit 320 by adjusting the current generated by the control circuit.

The haptic transmission unit 320 may generate a haptic stimulus (haptic information) on the basis of the control signal. The haptic transmission unit 320 may include two or more channels 312 and 325 to generate a haptic stimulus in a stereo fashion. For example, the two channels 321 and 325 may have directionality and correspond to inputs of left and right touch panel units 221 and 225 of a station 200. Alternatively, when a the user wears a band on each of the left arm and the right arm, the haptic device 300 of the left arm and the haptic device 300 of the right arm have directionality corresponding to the two channels and correspond to inputs of the left and right touch panels 221 and 225 of the station 200.

The intensity of motion of the haptic transmission unit 320 may correspond to the input intensity of the left and right touch panels 221 and 225 of the station 200. The input intensity may be divided into several stages in some cases and the intensity of motion may be divided into several stages corresponding to the stages of the input intensity.

FIGS. 17 and 18 are schematic diagrams illustrating operation forms of a haptic information providing system 100 according to various embodiments of the present invention.

For example, referring to (a) of FIG. 17, a user of a station 200 may touch a left touch panel unit 221 and then touch a right touch panel 225. The station 200 may receive force application data D1 in real time, convert the force application data D1 into haptic pattern data, and transmit the haptic pattern data to the haptic device 300. In the haptic device 300, "① vibration of a left haptic transmission unit 321->② vibration of a right haptic transmission unit 325 " corresponding to the "① touch of the left side of the station 200 and then ② touch of the right side" may be performed.

Referring to (b) of FIG. 17, the user of the station 200 may weakly touch the left touch panel unit 221 and then strongly touch the right touch panel unit 225. The station 200 may receive force application data D1 in real time, convert the force application data D1 into haptic pattern data, and transmit the haptic pattern data to the haptic device 300. In the haptic device 200, "① soft vibration of the left haptic transmission unit 321->② strong vibration of the right haptic transmission unit 325" corresponding to "① soft touch of a left side of the station 200->② strong touch of a right side" may be performed.

As described above, a wearer of the haptic device 300 may realize the substantially the same feeling as the feeling that the user of the station 200 desires to deliver with a combination of the direction, period, and intensity of a haptic stimulus (haptic information).

In another example, referring to (a) of FIG. 18, the user of the station 200 may press a first button 231 of the pattern selecting unit 230. The station 200 may transmit haptic pattern data stored in the first button 231 to the haptic device 300. The haptic device 300 may operate the left and right haptic transmission units 321 and 325 according to a pattern corresponding to the haptic pattern data of the first button 231.

Referring to (b) of FIG. 18, the user of the station 200 may press a second button 232 of the pattern selecting unit 230. The station 200 may transmit haptic pattern data stored in the second button 232 to the haptic device 300. The haptic device 300 may operate the light and right haptic transmission units 321 and 325 according to a pattern corresponding to the haptic pattern data of the second button 232.

As described above, each time a mood, such as a song, dance, and the like, changes, the user of the station 200 may have an advantage of operating the haptic device 300 in an appropriate pattern.

FIG. 19 illustrates graphs showing operation signals of the haptic transmission unit 320 for event effects 130 and 140 according to one embodiment of the present invention. In FIG. 19, a solid line is a control signal for driving the left haptic transmission unit 321 among the arranged haptic transmission units 320 and a dotted line is a control signal for driving the right haptic transmission unit 325.

In (a) of FIG. 19, pattern signals are configured to transfer haptic information of feeling of jumping to intuitively express joy and excitement. In (b) of FIG. 19, pattern signals are configured to transfer haptic information of feeling of palpitating. In (c) of FIG. 19, pattern signals are configured to transfer haptic information corresponding to a sad atmosphere and a gloomy atmosphere. In (d) of FIG. 19, pattern signals are configured to transfer haptic information corresponding to an enthusiastic atmosphere and a violent atmosphere.

As described above, the haptic information providing system 100 of the present invention may visually and audibly implement an atmosphere of content 110 and add an atmosphere in a tactile manner, thereby providing five-dimensional (5D) sensations, beyond 3D and 4D sensations.

The present invention may provide rhythmic haptic sensations and lively beats of music to concerts, musicals, plays, dance performances, movies, and the like, thereby creating and leading new cultural trends by adding inspiration, fun, and three-dimensional impressions to each medium and concert.

Also, the present invention may transfer haptic sensations including vibration simultaneously to a large number of users, convert rhythm and beat of music into rhythmic fine haptic sensations, and transfer the haptic sensations.

Moreover, the present invention may transfer sensible haptic pattern content through the station 200 and the haptic device 300 in an associatively operating manner and in an independently operating manner, and enable expansion to and replacement with various educational and therapeutic contents by liking with a PC and a smartphone.

In addition, the present invention may transfer, instead of or together with sound, the rhythm, beat, and the like of music of a barrier-free music concert, musical, theatrical performance, and the like, which can be communicated, shared, and enjoyed by persons with visual impairment and non-disabled persons by employing a haptic technique, thereby providing a fun and new way of communicating and empathizing, while increasing the cultural and social accessibility of the visually or hearing impaired.

In addition, the present invention may be utilized for performances using music content, music rhythm teaching aids for persons with hearing impairment or developmental disorder, and music psychotherapy devices for children and ordinary adults. Furthermore, the sensible haptic pattern technology according to the present invention may be utilized in educational content that help people with disabilities develop their intelligence and improve social activity, thereby actively solving their problems.

Moreover, considering that it is impossible for the hearing impaired to recognize sound through ears but they have a highly developed sense of touch that detects a vibration or the like, educational programs and devices to which a sensible haptic technology is applied are required for the people with hearing impairment. At this point, the haptic technology according to the present invention may be applied to Orff music rhythm education or the like, so that the hearing-impaired people may feel music through music and rhythm teaching aid terminal devices and develop their speaking ability, creativity, and sense of cooperation.

Although the invention has been described and illustrated with reference to specific illustrative embodiments thereof, it is not intended that the invention be limited to those illustrative embodiments. Those skilled in the art will recognize that variations and modifications can be made without departing from the spirit of the invention.

## Claims

1. A haptic information providing system comprising:
a station configured to generate haptic pattern data on the basis of an input signal; and
a haptic device configured to receive the haptic pattern data from the station, generate a haptic stimulus, and transmit the haptic stimulus to a user.

2. The haptic information providing system of claim 1, wherein the station generates the haptic pattern data on the basis of the input signal which includes at least one of force application data, content data, and event effect data.

3. The haptic information providing system of claim 1, wherein the station comprises
a receiving unit configured to receive the input signal;
at least one touch panel unit configured to receive an external force;
a haptic pattern data generating unit configured to convert the input signal to generate the haptic pattern data; and
a transmission unit configured to convert the haptic pattern data into wireless data and transmit the wireless data to the haptic device.

4. The haptic information providing system of claim 3, wherein the station further comprises a pattern selecting unit configured to provide a plurality of buttons and each of the buttons of the pattern selecting unit instantaneously implements pre-stored haptic pattern data.

5. The haptic information providing system of claim 3, wherein the station further comprises a visualization unit and the visualization unit generates light corresponding to the haptic pattern data.

6. The haptic information providing system of claim 5, wherein the light emitted from the visualization unit corresponds to at least one of an intensity of force, included in the haptic pattern data, to be applied to the touch panel unit, and rhythm, time, and beat of content or of an event effect.

7. The haptic information providing system of claim 1, wherein a plurality of users wear the haptic device and a haptic stimulus based on specific haptic pattern data is transferred to a specific user or a specific user group.

8. The haptic information providing system of claim 1, wherein the haptic device comprises
a receiving unit configured to receive wireless data;
a haptic transmitter control unit configured to generate a control signal for controlling a haptic transmission unit on the basis of haptic pattern data extracted from the wireless data; and
at least one haptic transmission unit configured to generate a haptic stimulus.

9. The haptic information providing system of claim 8, wherein the station comprises a plurality of touch panel units, the haptic device comprises a plurality of haptic transmission units, and the touch panel units and the haptic transmission units match each other and operate according to their disposed positions.

10. The haptic information providing system of claim 9, wherein an intensity of force received by the touch panel units matches an intensity of motion of the haptic transmission units.

11. The haptic information providing system of claim 8, wherein the station comprises a plurality of touch panel units, each user wears a plurality of haptic devices, and the touch panel units and the haptic devices worn by each user match each other according to their disposed positions.

12. The haptic information providing system of claim 8, wherein the haptic transmission unit operates corresponding to at least one of rhythm, time, and beat of content or event effect included in the haptic pattern data.

13. The haptic information providing system of claim 8, wherein the haptic transmission unit includes one of an eccentric motor, a linear resonance actuator, a piezoelectric actuator, an electroactive polymer actuator, an electrostatic actuator.

14. The haptic information providing system of claim 8, wherein the haptic transmission unit comprises a haptic unit formed of magnetic particles and a matrix material and a magnetic field generating unit configured to apply a magnetic field.

15. The haptic information providing unit of claim 14, wherein the haptic transmission unit has a first shape when not affected by a magnetic field, has a second shape when affected by a magnetic field, and transmits haptic information by repeating transformation between the first shape and the second shape.

16. The haptic information providing unit of claim 14, wherein the haptic unit is in a shape of at least one of a fine projection, a hollow cylinder, a dome, a polyhedron, a plate, a leaf spring, a seesaw, and a tunnel.

17. The haptic information providing unit of claim 8, wherein the haptic device further comprises a visualization unit and the visualization unit generates light corresponding to the haptic pattern data.

18. The haptic information providing unit of claim 8, wherein the haptic device is in a shape of a band, a ring, a stick, or a glove.

19. The haptic information providing unit of claim 1, wherein the haptic stimulus is at least one of vibration, brushing, constriction, hitting, pressing, tapping, tilting, and tickling.
